# EUROPEAN PATENT SPECIFICATION

(11) **EP 0 963 637 B1**
(45) Date of publication and mention of the grant of the patent: **18.07.2007**
(21) Application number: 98959116.9
(22) Date of filing: 28.12.1998
(51) Int. Cl.: H04L 9/32

(54) **TRANSMITTING REVISIONS WITH DIGITAL SIGNATURES**
ÜBERTRAGUNG VON REVISIONEN MIT DIGITALEN UNTERSCHRIFTEN
TRANSMISSION DE REVISIONS COMPORTANT DES SIGNATURES NUMERIQUES

(30) Priority: 31.12.1997 US 2098
(43) Date of publication of application: 15.12.1999
(73) Proprietor: Koninklijke Philips Electronics N.V., 5621 BA Eindhoven (NL); PHILIPS AB, 164 85 Stockholm (SE)
(72) Inventor: EPSTEIN, Michael, NL-5656 AA Eindhoven (NL)
(74) Representative: Faessen, Louis Marie Hubertus
(86) International application number: PCT/IB1998/002120
(87) International publication number: WO 1999/035785

(56) References cited:
- EP-A1- 0 586 022
- EP-A2- 0 624 014
- US-A- 5 136 646
- US-A- 5 347 579
- US-A- 5 659 616

## Description

### FIELD OF THE INVENTION

The invention is related to the field of cryptography and more specifically to cryptographically timestamping documents to prove their existence at a certain time.

### BACKGROUND OF THE INVENTION

In many common situations people need to verify that a digital document (i.e. a document that is digitally stored in a computer system) existed on a certain date. That is, we may need to prove that no one has altered or revised the digital document since a certain date such as the alleged creation date or transmittal date of the document.

One method of providing such proof is known as electronic notarizing or timestamping. A one-way hash of the document is produced, and the hash is encrypted using a private key of the owner of the document to form a so called digital signature. The document signature is sent to a digital notary or time stamper who combines the digital signature with a digital time (digital representation of the time and date) to form a time stamp, hashes the time stamp and encrypts the time stamp hash using the digital notary's private key to form another digital signature called the time stamp signature. Then the notary sends a certification including the time stamp and the time stamp signature to the author. Anyone with the notary's public key can decrypt the time stamp signature and compare the result to a hash of the author's signature and time of certification to prove that the author's signature existed when the certification was created and that the server's signature and time of certification were originally encrypted together by someone who had access to the notary's private key.

Notarizing digital documents is disclosed in U.S. patent 5,136,646. Notarizing by secure hardware in a system is disclosed in U.S. patent 5,001,752. Public key cryptography is disclosed in "New Directions in Cryptography" by Diffie and Hellman in IEEE Transactions On Information Theory, Vol IT-22, November 1976, pp 644-654 and in U.S. patents 4,405,829 to Rivest and 4,868,877. One-way hashing is disclosed in "Collision-Free Has Functions and Public Key Signature Schemes", Advances in Cryptology - Eurocrypt '87, Springer-Verlag, LNCS, 1988, vol. 304, pp. 203-217.

An embodiment of a system in which such a method can be used is described in US 5347.579 where a computer diary system is described that archives a diary entry by creating, time stamping, authenticating and permanently storing a reference data block along with each diary entry. An archived diary entry can only be modified by placing original text within compartment codes such as cross-out or tear-out codes, and by placing inserted text within insertion codes so that the original diary entry can be recreated from the modified diary entry. The reference data block, which can be the original diary entry, a canonical version of the original diary entry, or a one way fixed length encryption of the original diary entry, cannot be modified and is used to authenticate the original diary entry, Within the authentication procedure, time-stamped data and the signature is inputted by a user. If the input data is working data text, then this data is stripped to create a canonical form of the text. If a public key procedure is used then a conventional public key procedure is used. Otherwise, a signature is computed from the stripped text and appended time stamp. This computed signature is compared to the signature in the archived reference data and if found identical returns a confirmation signal; otherwise a non-confirmation signal is returned.

### SUMMARY OF THE INVENTION

It is an object of the invention to provide methods and apparatus for the authentication of revisions.

In the inventions disclosed herein, an original document and a revised document derived from the original document are signed and notarized in such a way that the relationship between the original document and revised document can be proved as well as the origination of the revision and , optionally, the time of the revision's notarization.

In one embodiment of the invention, the original document is signed and notarized, then later the document is revised and the revision and its relationship to the original document are signed and notarized. In another embodiment, the original document and an automatically generated revision of the document are simultaneously signed and notarized. This allows proof of authorship and the time of generation of an automatically generated revision such as a lossy compression of information.

Other alternatives and advantages of applicant's inventions will be disclosed or become obvious to those skilled in the art by studying the detailed description below with reference to the following drawings which illustrate the elements of the appended claims of the inventions.

### BRIEF DESCRIPTION OF THE DRAWINGS

Figures 1a-1d shows a flow chart of a specific embodiment of the invention for authenticating revisions.
Figures 2a-2d shows another flow chart of another specific embodiment of the invention for authenticating revisions.
Figures 3a-3c illustrate another flow chart of a specific embodiment of the invention for authenticating revisions.
Figure 4 shows a sample embodiment of the network system of the invention.
Figure 5 provides additional details of the authoring stations of figure 4.
Figure 6 shows additional details of the secure server of figure 4.
Figure 7 illustrates additional details of the notary's host of figure 4.
Figure 8 shows a specific embodiment of apparatus to program the system of figure 3.

### DETAILED DESCRIPTION OF THE PREFERRED EMBODIMENT

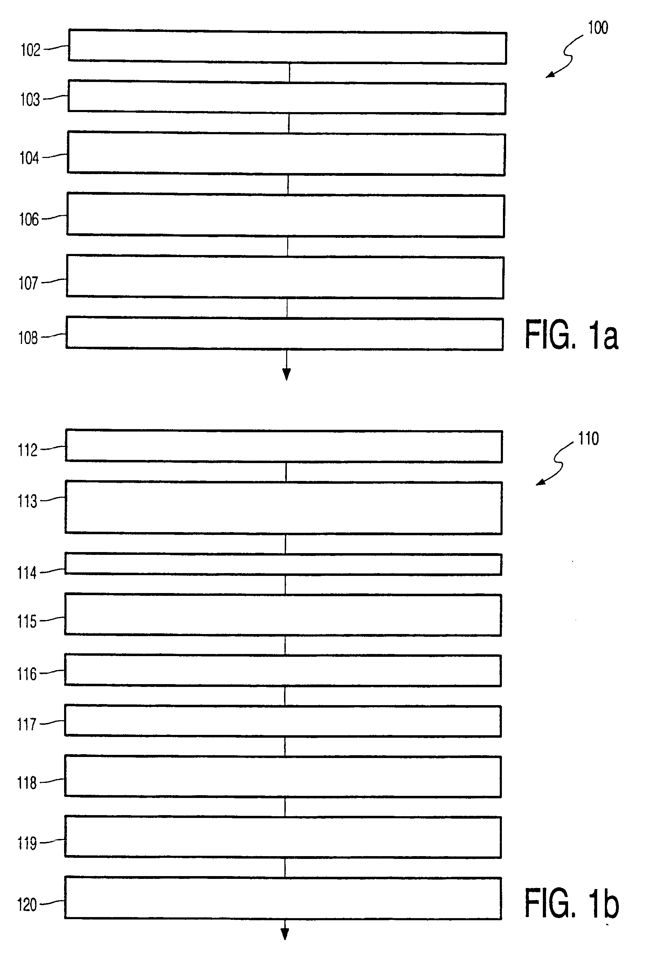

Figures 1a-1d show a specific embodiment of the invention for authenticating revisions. Figure 1a shows a first group of steps 100 of the method in which software loaded in the author's workstation provides for creating and signing a digital document so that others can authenticate the origin of the document. The author has a private key that can encrypt digital information and other parties have a public key that can decrypt the information. That is, the author has made the public key publicly available, for example, on a server where others who which to verify the origin of the report (e.g. that the author produced the report) or integrity of the report (i.e. that the report has not been changed since it was signed), can access the report and the public key. In this first portion 100 of the invention, in step 102, an author creates a report (digital document) using software loaded onto the workstation which is connected to a server in a network, and the author inputs a command to submit the report to the server.

The report contains the type of information that someone may desire to prove originated from the author and has not been altered. In step 103, the author's workstation hashes the report using a specified one-way hashing method. The advantage of a one-way hash is that it can not be reversed to decode the document, so that even if the document were confidential or private the hash would not have to be kept confidential. In step 104, the workstation encrypts the hash using the author's private key (or privite key of the workstation) to form the author's signature of the report. The purpose of the encryption is to provide proof that the author is the originator of the report, and that the report has not been altered by others. The encryption of the hash has nothing to do with keeping the data or the hash secret but only to prove integrity and origin. The report may include or be related to other information such as the title, author's name, the workstation ID, the time of creation. The workstation may store the report, hash, and signature relationally in the workstation if desired. Herein, relationally just means that, the fact that the report is related to the hash and signature and vice versa is also stored in the workstation. In step 106, the workstation sends (transmits) the author's identification, report title, report, and the author's signature for the report to a customer's server. If the contents of the report are confidential or private then a secure connection is formed between the workstation and the server before the transmission and the server is a secure server. In step 107, the server hashes the report and decrypts the author's signature using the author's public key. Then the server compares the hash of the report to the decrypted signature to verify that they match. If they match, the server knows that the signature and report are from the author (or at least someone with access to the author's private key) because it was the author's public key that decrypted the signature, and the server also knows that the signature and report have not been altered since the author signed the report. In step 108, the server stores the report, the author's identification (ID), and the author's signature relationally in the server's storage. Again herein, stored relationally (or with relation to) just means that, the fact that the related elements of information are related is also stored.

In a next group of steps 110 in figure 1b, the server obtains a time stamp for the report, and stores the time stamp with relation to the report. In step 112, the server sends the author's signature to a notary's host system over the network. Alternately, the notary could be a secure part of the hardware of the server, for example, a device with a private key that the owner of the server would not know or be able to discover without destroying the device. Since the signature in not confidential, high security is not required for signature transmission. In step 113, the host creates a time stamp containing the author's signature, receipt time, notary ID, sequence number, and customer ID. In step 114, the notary hashes the time stamp. In step 115, the notary signs the time stamp hash using the notary's private key. In step 116, the notary stores the time stamp and the notary's signature for the report. In step 117, the notary transmits to the server, the time stamp and the notary's signature. Also, one or more previous and/or subsequent time stamps may be sent in a package to the customer's server so that by contacting the other customers identified in the time stamps, the approximate time of the time stamp can be independently verified. In step 118, in order to verify the notary's signature, the server hashes the time stamp and decrypts the notary's signature using the notary's public key. In step 119, the server compares the results and if there is a match, then the time stamp is verified. That is, the server knows that the time stamp and notary's signature are from the notary and have not been altered. In step 120, the server stores the time stamp, notary's signature, and any previous and/or subsequent time stamps with relation to the report.

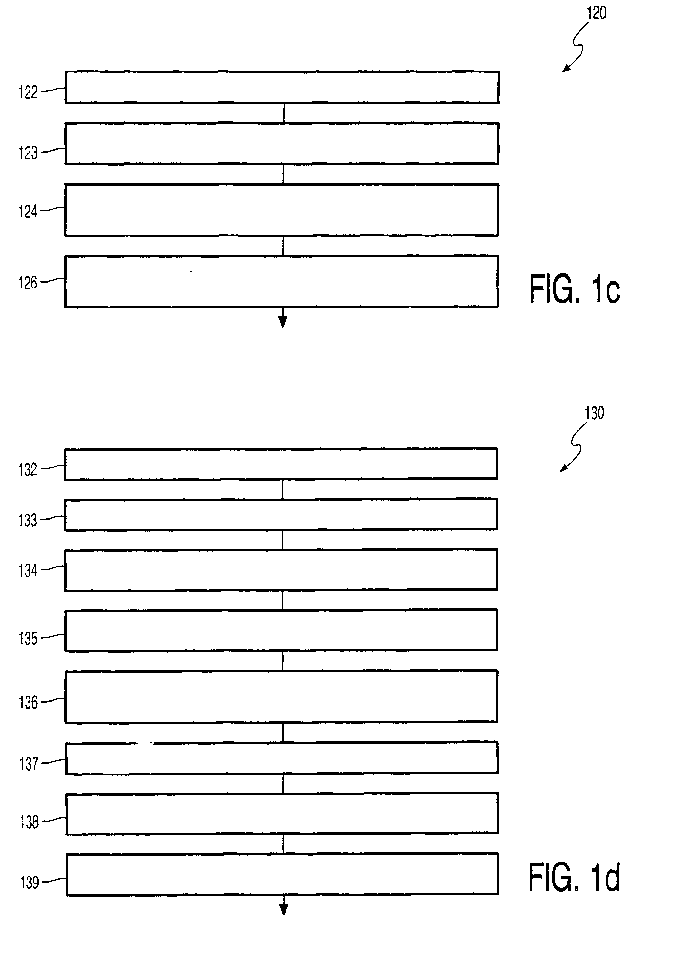

In the next group of steps 120 in figure 1c, a revisor (human user) obtains a copy of the report (original document) for revision and verifies its origin and integrity. In step 122, the reviser requests the original report from the server. There are many situations in which someone may need to revise a document, such as, to add additional materials or to correct errors. Preferably, the revisor tells the server that he plans to revise the report and the server thereafter refuses to transmit the report to anyone else who asks for the report for revising the report (i.e. the report is locked out for revision until the revisor provides the revision or otherwise releases the lock). In step 123, the server sends the original report, the report time stamp and notary's signature to the reviser's workstation. In step 124, the revisor's workstation hashes the time stamp and decrypts the notary's signature using the notary's public key to verify the notary's signature. That is, if the hash and the decryption of the signature match then the revisor knows that the notary's signature was produced by someone with access to the notary's private key and that the information in the time stamp existed when the signature was produced. Since the time stamp contains the author's signature and the time (including date) at which the notary's signature was produced, it proves that the author's signature existed at that time. In step 126, the workstation hashes the report and decrypts the author's signature (contained in the time stamp) using the notary's public key and compares the results to verify the author's signature. That is, if the hash and the decryption of the author's signature match then the report was signed by someone with access to the author's private key and that the report has not been changed since it was signed.

In the final group of steps 130 of this first embodiment, in figure 1d, the revisor creates a revision of the report and the revision is digitally signed, securely stored, and digitally notarized. In step 132, the reviser creates a revision of the report and inputs a command to submit the revision to the server. In step 133, the workstation combines the revision and the previous time stamp, and hashes the combination. The purpose for combining the time stamp with the revision before signing is to allow the relationship to the original document to be proved. Alternatively or in addition to the time stamp, other information indicating the history of the revision could be combined with the revision, such as, the signature of the original report, a hash of the original report, or the time stamp signature could have been included in the combination. In step 134, the workstation encrypts the hash of the combination using the revisor's (or workstation's) private key to form the revisor's signature. The workstation may store the revision, the hash, and the revisor's signature if desired. In step 135, the workstation sends the revision, revisor's identification, revision title, and revisor's signature to the server. In step 136 the server combines the revision and the time stamp of the original report, hashes the combination, and decodes the revisor's signature using the revisor's public key, to verify the origin and integrity of the revision. In step 137, the server compares the decrypted signature with the hash and; if the resulting hash and the decryption of the revisor's signature match then the server knows that the revision is from the revisor, the revision is based on the original report, and the revision and signature have not been changed since the revisor signed it. In step 138, the secure server stores the revision, revisor's ID, the title and the revisor's signature with relation to the original report. In step 139, the server obtains a time stamp for the revisor's signature from the notary and stores the time stamp with relation to revision. This is the same time-stamping process as described above in steps 110 for the original report. After this, future revisions will be made based on the most recent revision in a similar manner to document the history of revisions.

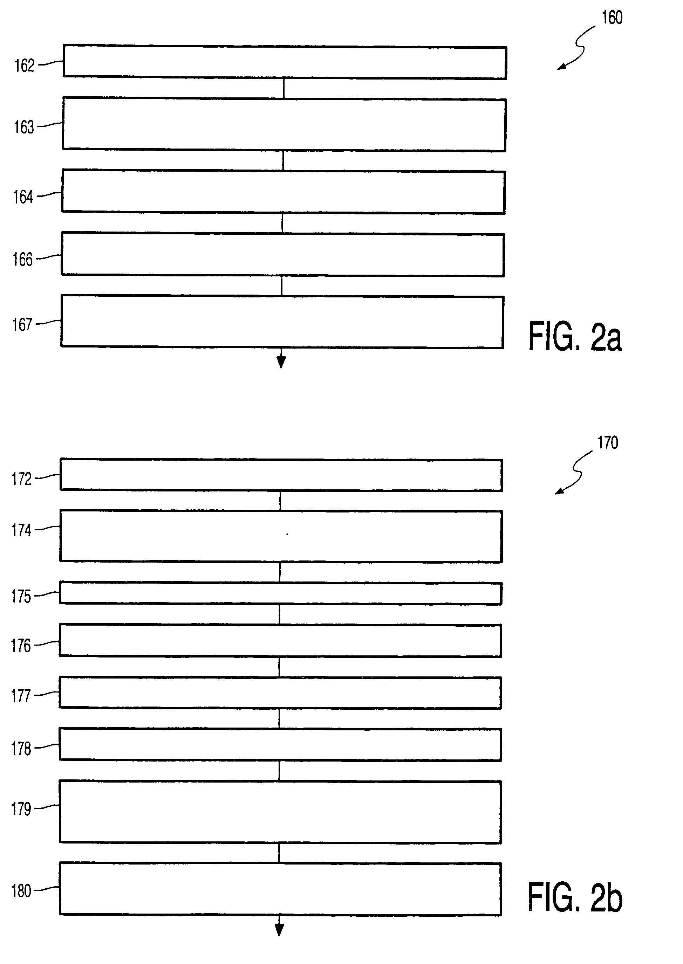

Figures 2a-2d show an alternative specific embodiment of the invention for authenticating revisions. In a first group of steps 160 in figure 2a, the author creates an image and transfers the image to a server which signs the image for the author and stores the image. In step 162, the author operates an imager to create an image and initiates submitting the image to a secure server. The imager may be any equipment that produces an image such as a business page scanner, medical scanner (electro-cardiogram / angiogram, ultrasound imager, computerized axial tomography, magnetic resonance imager, X-ray scanner) or any known method of making images, and the images may be a video image and/or an audio image. In step 163, the imager transmits the image to a secure server over a secure link. The transmission will identify the author or imager device. The server may return a sequence number for the imager to facilitate later access to the image. In step 164, the server combines the imager ID or author ID with the image and hashes the combination to produce an image hash, alternately, the server may combine a scanner ID or author ID with a hash of the image to provide the image hash. Well known methods of combining include appending the ID to the image hash or exclusive Oring the ID and image hash. Alternately, the imager or author could have specific private/public password (key) pairs that could be used to prove the origination of the image so the imager ID or author ID would not have to be combined with the image before hashing. In step 166, the server encrypts the identified combination using the server's private key (or author's or imager's private keys stored in the server) to form an image signature. In step 167, the server stores the image, imager ID (or author ID), image sequence number for imager, the image hash, and the server's image signature relationally.

In the next group of steps 170 in figure 2b, the server obtains a time stamp and a time stamp signature from a notary for the image. In step 172, the server establishes a connection with the notary's host network, and the server sends the server's image signature to the host. In step 174, the host creates an image time stamp containing the server's image signature, the receipt time, the notary ID, the sequence number of the time stamp (this is different than the sequence number of the image), and the server ID. In step 175, the host hashes the image time stamp, and in step 176, the host signs the time stamp hash using the notary's private key. In step 177, the host stores the image time stamp and the notary's image signature. In step 178, the host transmits an image certificate containing the image time stamp and notary's image signature to the server. In step 179, the server hashes the image time stamp and decodes the notary's image signature using the notary's public key in order to verify the integrity and origin of the time stamp and the notary's signature. In step 180, the server stores the notary's image certificate with relation to the image sequence numbers for the imager.

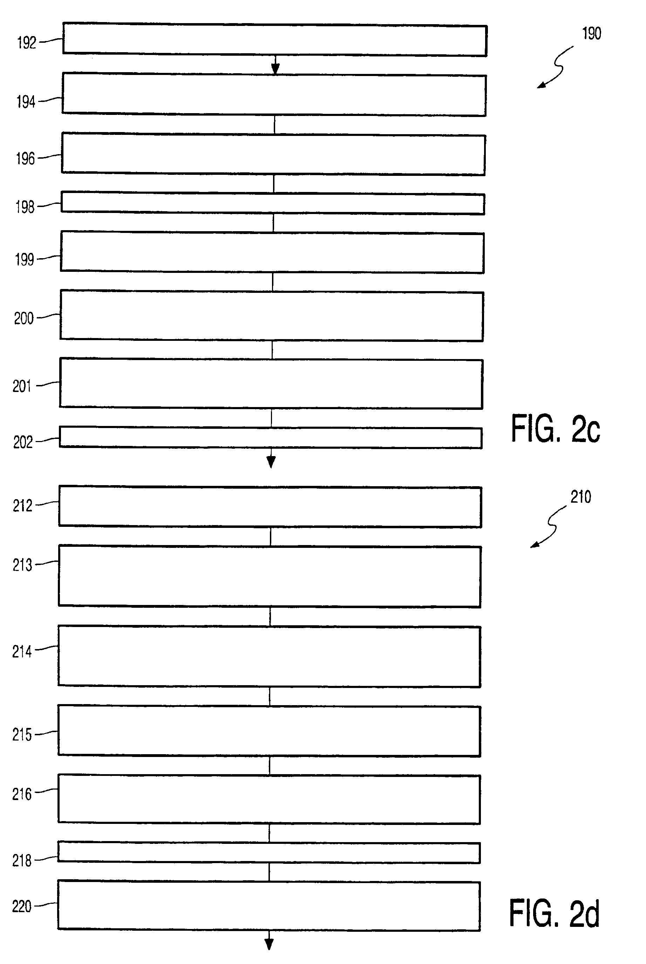

In the next portion of steps 190 in figure 2c, the server automatically revises the image and obtains a notarized time stamp for the revision. In step 192, the server compresses the image into a lossy condensation. For example, a bit image is compressed into a bit reduced image by JPEG compression, an audio image is compressed using MPEG-2 or Dolby AC3, or a video may be compressed using MPEG-2. In step 194, the server stores the condensation with relation to the image sequence number for the imager and other related information. In step 196, the server combines the condensation and the notary's image signature, for example, by appending them together. In step 198 the server hashes the combination to produce the condensation hash. In step 199, the server encrypts the condensation hash to form the server's condensation signature, and in step 200, the server stores the condensation hash and server's condensation signature with relation to the condensation. In step 201, the server obtains a condensation certificate (i.e. condensation time stamp and notary's condensation signature) from the notary for the server's condensation signature and stores the condensation certificate with relation to the condensation. In step 202, the server may delete the original image to conserve storage space, but of course this means that a user could no longer prove the creation date or origin of the original image or that the condensation is a product of the original image, at least independently from the records of the secure server. The deletion may be required because uncompressed images especially of a video, may require 100 times as much storage as the resulting compressed video, and such large amounts of storage may not be available or affordable by the customer. Alternatively, the original image may be archived onto removable tape or optical media and kept off line or even sent out to long term storage.

In the final set of steps 210 in figure 2d, a user requests the image for viewing on a viewer and the stored image is provided along with both time stamps and both notary's signatures, so that the viewer can verify the origin and certification date of the revision and that at least according to the records in the secure server, the revision is a product of the original image. In step 212, the user requests the condensed image using the viewer. The viewer may be any equipment that allows the condensed image to be played to the user. The viewer is not restricted to visual display and may be, for example, a loud speaker playing an audio image. In step 213, the server sends the image hash, the imager ID, the image condensation, both respective time stamps (one for the image and one for the compressed image) and similarly both of the notary's signatures to the viewer. In step 214, the viewer hashes the condensation time stamp and decrypts the notary's condensation signature using the notary's public key in order to verify the digital time and other information in the condensation time stamp. In step 215, the viewer hashes the image time stamp and decrypts the notary's image signature using the notary's public key to verify the image time stamp. In step 216, the viewer combines the condensation hash and the notary's image signature and hashes the combination and in step 218 the viewer decrypts the servers's condensation signature and compares the decryption with the hash to verify the origin and integrity of the condensation. Also, the viewer may decrypt the server's image signature and compare it to the image hash to cross check the records of the secure server regarding the imager ID. After both time stamps are verified, the viewer may compare the image time stamp time with the condensation time stamp time to verify that the times are very close. In step 218, the viewer decompresses the image. In step 220, the viewer displays the decompressed image, imager ID or (author's ID), image submission time, and condensing time to the user.

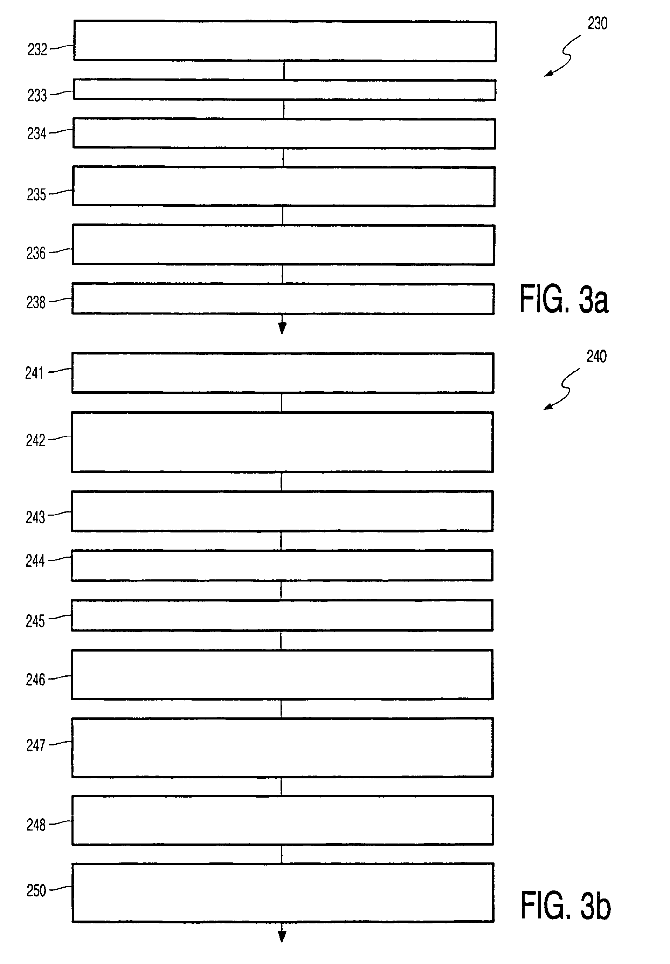

Figures 3a-3c illustrate another embodiment of the invention wherein a server automatically and immediately compresses a video upon receipt, and obtains one time stamp for both the respective receipt of the video and the compression of the video. In a first group 230 of steps in figure 3a, the video is created and transmitted to the server. In step 232, the author operates the video imager to create the video and to submit the video to the server. The imager may be any equipment for creating multimedia presentations such as a video camera and microphone. The video may include sound channels and other data as well as video images. Preferably, a title is also created. In step 233, the imager first compresses the video for transmission. For example, the imager may compress the video using MPEG-2 or another simple lossy compression or more preferably by a lossless compression methods. In step 234, the imager hashes the first condensation of the video. The imager may also hash other information such as the imager ID or image sequence number with the image hash as described above. In step 235, the imager encrypts the hash with the imager's (or author's) private key to sign the video. The imager may store the video, first compression, hash and imager's signature at least until verification of receipt is obtained from the server. In step 236, the imager transmits the video title, first condensation, and signature to the server. In step 238, the imager deletes the video to conserve storage and later after receiving receipt of reception from the server, the imager deletes first condensation of the video. Alternately, the first condensation may be archived at the imager, but generally it is more convenient to only archive the first condensation at the server as described below.

In a second set of steps 240, in figure 3b, the server receives, verifies, and stores the first condensation, second compresses the video, and obtains a time stamp and time stamp signature for the second compression from a notary. In step 241, the server receives the first condensation of the video, imager's signature, title, imager ID and possibly other related information and transmits the receipt back to the imager. In step 242, the server hashes the first condensation of the video and decrypts the video imager's signature using the imager's public key and compares the decryption to the hash to verify the origin and integrity of the first condensation. In step 243, the server stores the title, author's ID, imager's signature and the hash of first condensation relationally. In step 244, immediately after verification, the server second compresses the video to produce a second condensation. In step 245, the server archives the first condensation of the video to conserve storage space and deletes the first condensation from online storage.

In step 246, the server combines the title, imager's ID, author's ID, imager's signature (or author's signature), and second condensation and hashes the combination. In step 247, the server encrypts the combination hash using the server's private key to form the server's signature for the second compressed video. In step 248, the server stores the second compressed video and the server's video signature relationally with the title and imager's signature and related information. In step 250, the server obtains a time stamp and notary's signature from the notary for the server's signature, verifies the notary's time stamp and signature, and stores the notary's time stamp and signature with relation to the second condensation.

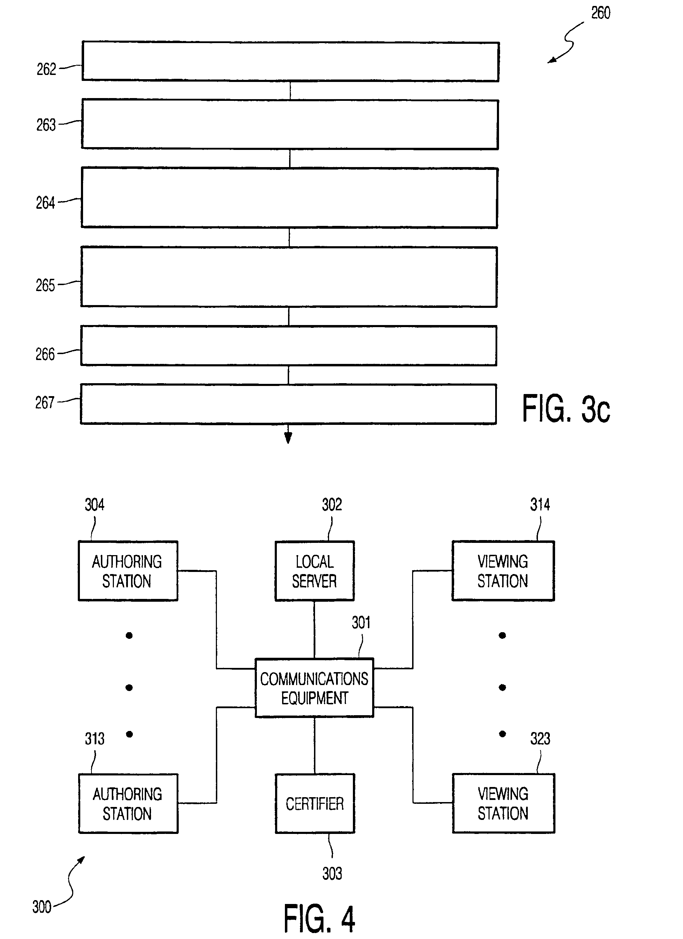

In a final group of steps 260 for this embodiment, in figure 3c, the video is requested, verified and viewed on a display. In step 262, the user at the displayer requests the video from the server. In step 263, the server sends the imager ID, title, second condensation, the notary's time stamp (containing the server's signature), and the notary's signature to the displayer. The hash of the first condensation and the video imager's signature may also be sent in order to cross check the origin of the video. In step 264, the displayer decrypts the notary's signature using the notory's public key, hashes the time stamp, and compares the results to verify the time stamp. In step 265, the displayer combines and hashes as described above to form the second condensation hash and decrypts the server's signature using the server's public key and compares the results to verify the origin and integrity of the second condensation. The displayer may also receive the imager's signature and the first condensation hash and then decrypt the imager's signature and compare the result to the first condensation hash to cross check the records of the serverfor the origin of the first condensation. The displayer cannot independently verify the origin and integrity of the first condensation without obtaining a copy of the first condensation. In step 266, the viewer (displayer) decodes the second condensation to form the decompressed video. Finally, in step 267, the user views the video on the displayer. The user may also be able to view other information about the video such as the author' ID, imager's ID, the creation time of the second condensation, and notary's time stamp information.

Figure 4 illustrates a network 300 of the invention in which a multitude of computer nodes are connected together by a communications network of cables and communications equipment 301. The network nodes include a local server 302 and a notary 303. A multitude of authoring stations 304-313 are connected through the communications network with the server, and a multitude of viewing stations 314-323 may also be connected to the server through the communications network. The authoring stations have equipment for creating documents such as X-rays, test data, scans, video and audio images, multimedia presentations and apparatus for transmitting the documents to the server, for requesting documents from the server, and for revising such documents. The viewing stations are primarily for requesting digital documents from the server and viewing the documents but may also have some limited facilities for revising the documents such as adding notes and comments.

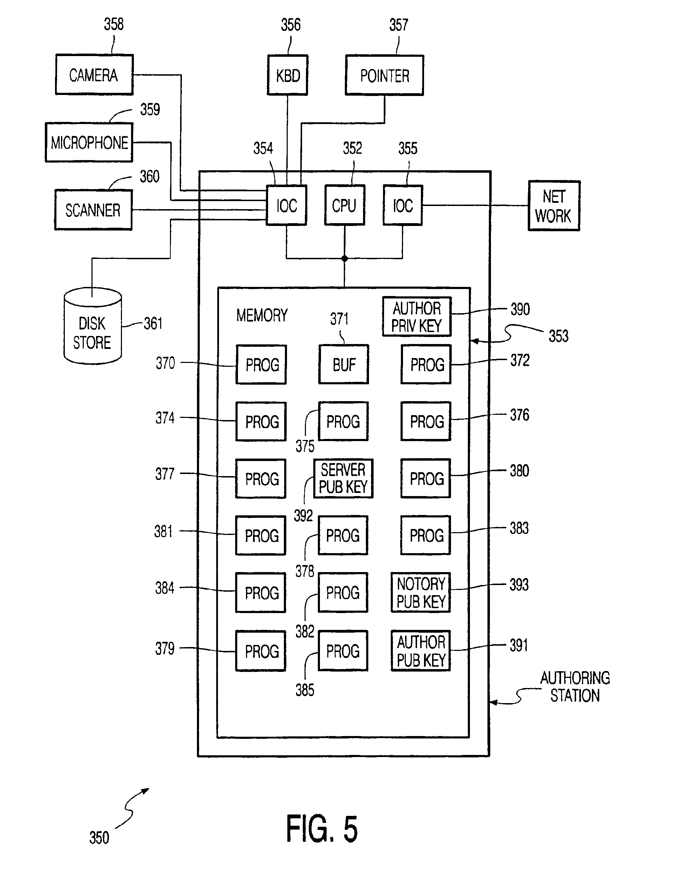

In figure 5, additional details of authoring station 304 in figure 4, are shown. The authoring station includes a processor 352 such as a central processing unit (CPU) or an embedded controller, communicating with an electronic memory 353. The memory includes programs which control the operation of the processor and buffers for storing information received through an input and/or output (I/O) circuit 354 (IOC) from authoring station peripherals and for transmitting and receiving information from other nodes of the network through IOC 355. The peripherals may include, for example, keyboard 356, a pointer such as mouse 357, video camera 358, microphone 359, scanner 360, and disk storage 361.

The memory includes program module 370 for interacting with a user to produce a document which is stored in buffer 371, and to initiate the process for sending the document to the server. The memory includes program module 372 to hash the document using a one-way hash and to encrypt the hash using a private key 390 of the user (originator) or a private key 390 of the station to provide a digital signature for the document. The memory may also include a module 373 to transmit the document along with the signature to the server. Program module 375 may be used to store the document, hash, and/or digital signature into storage 361. For video and audio images, the memory includes a program module 376 to encode the video into a compressed form such as motion JPEG, or MPEG-2 video or more preferably a lossless compression method, and to store the compression of the video as another document in buffer 371.

In the case where a digital signature is produced by the server, the authoring system may include module 377 for receiving the document signature, a time stamp, and a time stamp signature from the server into buffer 371 and a module 378 to verify the signature and to initiate module 375 to store the document signature, the time stamp, and the time stamp signature in storage 361.

The authoring station may also be used for revising documents to produce revisions which may be returned to the server. Program module 370 may be used by a human reviewer to request a document from the server. Program module 379 negotiates the receipt of the document and related time stamps and other information from the server, and program 380 authenticates the document. In one embodiment of the invention described above, in addition to the document, the revising station receives a time stamp (as described below) and a notary's signature. Module 380 includes apparatus 383 to hash the time stamp and decrypt the notary's signature using the notary's public key 393 and module 384 compares the results to verify the origin of the time stamp and verify that the contents of the time stamp including the digital time have not been altered. Then program 385 of module 380 hashes the document and decrypts the server's (or author's) signature (contained in the time stamp) and compares the results to determine if the server's signature is for the document and verify that the document has not been changed since it was signed by the server. Furthermore, if the document is a revision, then the server may also transmit, and module 379 receive, a hash of the original document, the server's (or revising author's) signature for the revision, another time stamp and notary's signature for the original document, and then module 385 can again authenticate the time stamp for the original document and then decrypt the server's signature (contained in the time stamp) and compare the results to the hash of the original document to verify the origin of the document. Also, in some of the above embodiments information such as the revisor's signature or a previous notary's signature are combined with the document before hashing and encrypting to form the server's signature, and in those cases module 385 will have to compare the decrypted signature with a hash of the appropriate combination of such items. Then module 386 is used for interaction with the user to revise the document. Module 384 hashes the revision combined with the previous time stamp and encrypts the hash to form a revision document signature. Then the revision and revision signature may be stored, transmitted secured and verified in a manner similar to an original document.

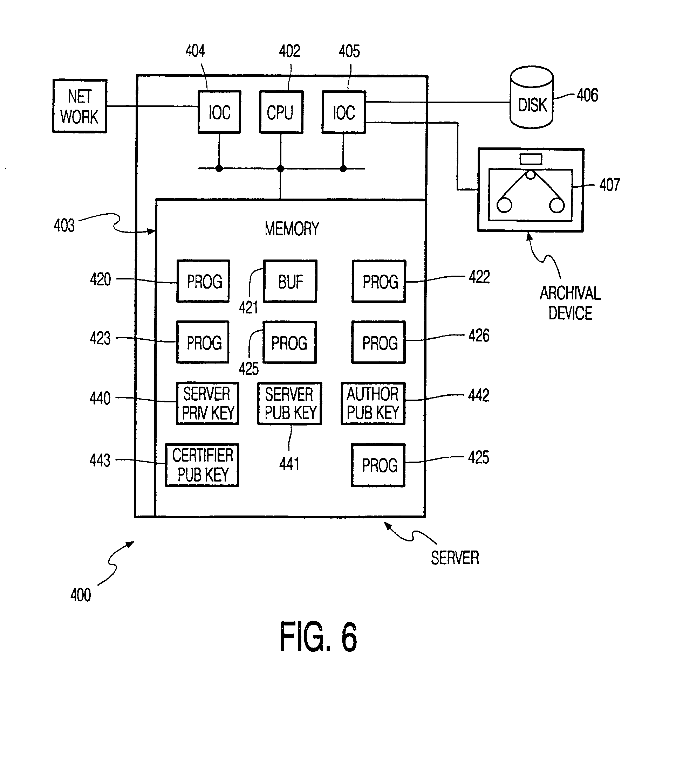

In figure 6, additional details of server 302 in figure 4, are shown. The server includes a processor 402 such as a central processing unit (CPU) or an embedded controller, communicating with an electronic memory 403. The memory includes programs which control the operation of the processor and buffers for storing information received from the network and information being transmitted onto the network through an input and/or output (I/O) circuit 404 (IOC). IOC 404 is for transmitting information to and receiving information from other nodes connected to the network. The server may be a gateway server, for example, connected to local clients through one IOC in a network and connected to other servers and/or remote clients in another network through another IOC. IOC 405 is used for storing information onto disk storage 406, retrieves stored information, sending information to archival storage device 407, and occasionally for retrieving archived information.

The memory includes program module 420 which copies documents between the network and portions of buffer 421 through IOC 404. In some of the above embodiments, the server receives a digitally signed document from an authoring station. In such case, program module 423 performs a one-way hash on the document, decrypts the digital signature and compares the result to verify that the document has not been changed since it was digitally signed and that the origin of the document is correct. In another of the embodiments above, the server receives a document which is not signed through a secure network. In such case, program module 423 hashes the document and encrypts the hash using either the server's private key or the originator's (or authoring station's) private key (which in this case is kept on the secure server). In another of the embodiments, a revisor combines the revision with a time stamp, time stamp hash, or notary's signature, hashes the combination and encrypts the hash to sign the revision. Thus, the revision signature verifies not just the origin and integrity of the revision, but also identifies the original document from which the revision was derived. The reviser then sends the revision and revision signature to the server. In such a case, module 423 in the server decrypts the revision signature, combines the revision with the original document time stamp and any other information in the same manner as the revisor, hashes the combination, and compares the results to verify the origin of the revision, origin of the original documents, and that the revision has not been altered since signing.

In another of the above embodiments, the server receives an unsigned revision, and then module 423 may combine the revision with some indication of the origin of the original document (a hash of the previous document, the previous author's signature, the previous time stamp, previous time stamp hash or the previous time stamp signature) and an indication of the origin of the revision (revisor's ID, work station ID), hashes the combination, and then encrypts the hash (i.e. signs the document) using either the server's private key or the originator's private key.

In still another one of the above embodiments, the server receives a document (if it is not signed then program 423 signs the document), and then module 425 obtains a time stamp for the document. Then module 420 automatically revises the document, hashes the combination of the original time stamp and the revised document, and signs the hash. Then module 424 obtains another time stamp for the automatic revision.

In another of the above embodiments, module 422 receives a document, and module 420 signs the document (and if no signature is received with the document) combines the revised document with identifying information, and then module 422 automatically revises the document, hashes the combination, and signs the hash. Then module 424 obtains a time stamp for the signature for the automatic revision.

After the document is signed, program module 425 sends the signature to a notary who creates a time stamp containing the server's signature, server ID, sequence number, and a digital time (including date), signs the time stamp (to produce time stamp signature) and returns the time stamp and time stamp signature which are received by module 420. Then module 424 hashes the time stamp and decrypts the digital signature (using the notary's public key) to verify that the time stamp is from the identified notary and that the time stamp has not been changed since it was signed.

For revised documents, in order to save space in random access storage 406 (hard disk, DVD, CD-ROM), program module 426 copies old versions of documents onto removable computer media (e.g. tape) which is removed from the server, in a process known as archiving. If an archived document is requested then program 426 is responsible to have the archival tape loaded into the archival storage system 407 and to restore the required files back onto the server.

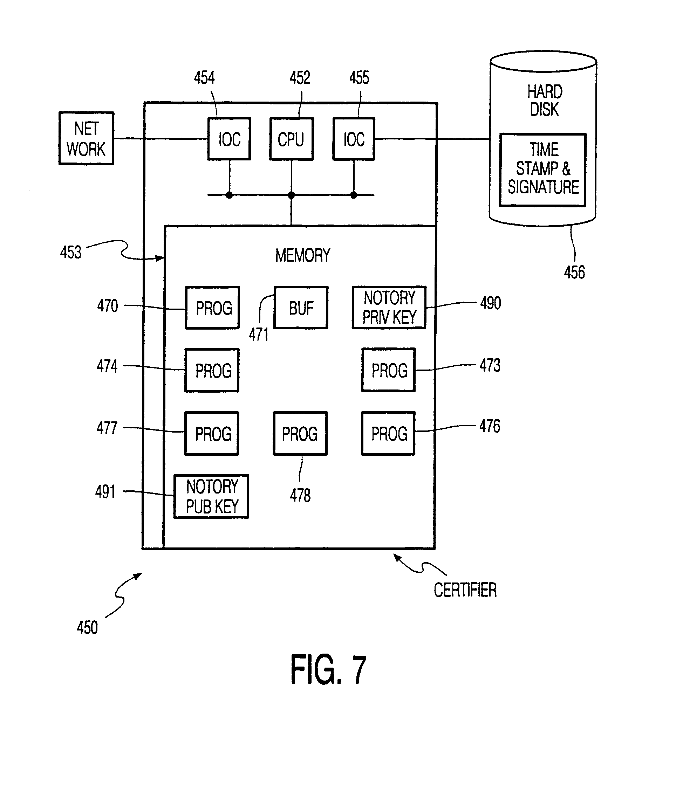

In figure 7, additional details of notary 303 in figure 4, are shown. The notary includes a processor 452 such as a central processing unit (CPU) or an embedded controller, communicating with an electronic memory 453. The memory includes programs which control the operation of the processor, and buffers for storing information received from the network and information being sent onto the network through an input and/or output (I/O) circuit 454 (IOC). IOC 454 is for transmitting information to and receiving information from other nodes connected to the network. IOC 455 is used for storing the time stamps and time stamp signatures on disk 456.

The memory includes program module 470 for controlling the receiving of document signatures and transmission of time stamps and time stamp signatures. When a notary signature is requested, program 470 copies the document signatures from the network into portions of buffer 471. After the time stamps and notary's signatures are produced program 470 copies the time stamp and time stamp signature from portions of buffer 471 onto the network. Program module 472 reads the server's signature from the buffer and creates a time stamp containing: the server's signature, the time that the server's signature was received (in any time format), a notary ID, and a sequence number. Then module 472 hashes the time stamp and encrypts the hash with the notary's private key to form a time stamp signature of the notary. Then module 473 prepares a transmission of the time stamp and the notary's signature and stores the certificate transmission into buffer 471 and initiates module 470 to transmit the certificate of the notary back to the customer. Program module 474 also copies the time stamp and time stamp signature through IOC 455 onto hard disk drive 456 together as a time stamp signature record.

When verification of the authenticity of a time stamp signature is requested, the request may provide either the document signature, the time stamp, the time stamp signature, or the sequence number. The notary includes module 476 for retrieving the certificate (time stamp and notary's signature) from storage 456, and may include module 477 for comparing the information provided in the verification request with the information in the record and determining whether the information matches. Module 478 then prepares a transmission of the time stamp record and/or results of the comparison to authenticate the information and stores the response in buffer 471, and module 470 transmits the response.

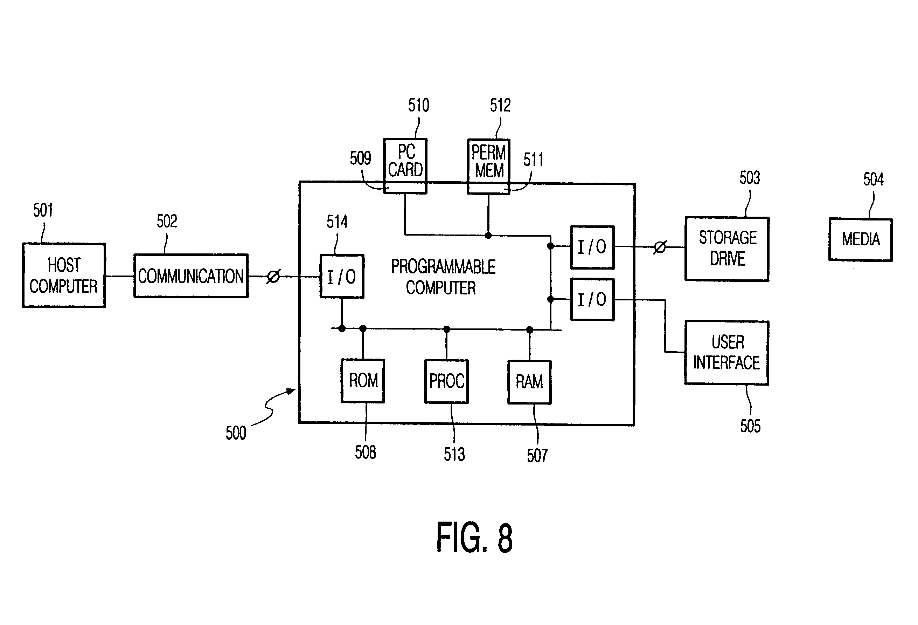

Figure 8 illustrates a programmable computer system 500 and various example apparatus for programming such programmable computer which are all well known in the art. The computer system may be programed either by connecting non-volatile memory (e.g. ROM, PROM, EEPROM, flash memory, battery backed SRAM) containing programmed structures to the programmable computer or by providing signals to the programmable computer which may be applied to memory of the programmable computer to provide programmed structures. Another computer system 501 such as an Internet server may be connected through a communication apparatus 502 to system 500 to provide signals for programming system 500. Apparatus 502 may include a copper or optic cable, radio, infrared, or network such as Ethernet, ARCnet, Token ring, or a modem and telephone system. A storage drive 503 may have integral media 504 and be removably attached to system 500 or drive 503 may be integral with system 500 and receive signals from removable computer media 504. System 500 may include a user interface 505 and program input module 506, and written materials may be provided. A user may input the signals using apparatus (not shown)of the user interface such as a keyboard, text scanner, microphone, camera or bar code reader. The signals provided to system 500 may be copied to storage drive 503 for later recall into volatile memory 507 or stored in non-volatile memory 508 to provide programed apparatus in memory. Alternately the system may be programmed by providing programmed non-volatile memory. System 500 may include a slot 509 into which a cartridge 510 containing non-volatile memory such as a PC flash memory card, may be connected to provide programed apparatus. System 500 may include a socket 511 into which a non-volatile package 512 may be inserted to provide programmed apparatus. System 500 may be fabricated with non-volatile integral memory 508 to provide programmed apparatus. The programmed structures include programs and other data in memory which control a micro-processor 513 and I/O processors e.g. 114 of the programmable computer to implement computer processes. The computer system may be a workstation, modem, PC card, printer, or other software upgradable component. Other well known methods of programming a computer system may also be used.

The invention has been described with reference to specific embodiments including the best mode for carrying out the invention, and with sufficient detail that anyone skilled in the art can make and use the invention. Those skilled in the art may modify these embodiments or provide other embodiments within the scope of the invention, and thus, the description does not limit the present invention to the disclosed embodiments. The invention is limited only by the following appended claims.

## Claims

1. A computer network (300), comprising:
a user computer system (304, 350) providing user access to the network, including:
means (356-360 and 370) for providing an original document;
means (372, 422) to produce a document signature from the original document; and
means (355, 374) to transmit the original document signature;
a secure computer system (303, 450), including:
means (454, 470) to receive a document signature from the user system;
means (472) to provide a time stamp containing the document signature and a digital time at which the document was received; and
means (473, 454, 470) to transmit the time stamp to the user system;
the user system further including:
means (377, 355, 375, 384) to receive and store a time stamp for the original document;
means (386) for revising the original document to produce a revised document; and
means (387) to produce a revised document signature depending on the revised document;
and in which the means (355,373) to transmit the document signature are adapted to transmit the revised document signature;
the computer network further includes means (377, 378, 424, 472, 476, 477, 383, 384, and 485) to authenticate time stamps; and
**characterized in that** the revised document signature also depends on the time stamp for the original document.

2. The network of claim 1 in which the means to authenticate the time stamp, includes:
a private key (490) for encrypting data in the secure system;
a public key (491) capable of decrypting the data previously encrypted using the private key;
means (472) to produce a time stamp signature from the time stamp using the private key in the secure system;
means (473) to transmit the time stamp signature to the user system;
means (383) to decrypt the time stamp signature using a public key on the user system;
means (384) to compare the time stamp or a hash of the time stamp with the decrypted time stamp signature on the user system to determine whether the time stamp is authentic.

3. The network of claim 1 in which the means to authenticate the time stamp, include:
secure storage (456) for storing the time stamp on the secure system;
means (425) to transmit the time stamp from the user system to the secure system;
means (475) to retrieve the time stamp from secure storage into the secure system;
means (476) to compare the retrieved time stamp and transmitted time stamp; and
means (477) to transmit an authentication or authentication failure signal from the secure system to the user system, depending on the comparison.

4. The network of claim 1 in which the means to authenticate the time stamp include:
means (472) to produce a first time stamp signature from the time stamp using a private key in the secure system;
means (470, 473) to transmit the time stamp and first time stamp signature to the user system;
means to return the time stamp to the secure system;
means (473) to produce a second time stamp signature from the returned time stamp on the secure system;
means to transmit the second time stamp signature to the user system; and
means (383) to compare the first time stamp signature with the second time stamp signature to verify the authenticity of the time stamp.

5. The network of claim 1 in which:
the transmission from the secure server includes a previous time stamp and time stamp signature and a subsequent time stamp and time stamp signature, each time stamp including customer identification;
the user system stores the previous and subsequent time stamp and signature; and
the means to authenticate the time stamp are adapted to communicate with the customer identified by the subsequent time stamp and to obtain a copy of the subsequent time stamp and time stamp signature from the subsequent customer.

6. The network of claim 1 in which the means for revising the document automatically revises the document upon receipt of the document.

7. The network of claim 1 in which the user computer system includes an authoring work station (350) for producing the document and a secure server (400) for storing the document, document signature, and document time stamp.

8. A computer system (304, 350) including:
means (356, 360 and 370) for providing an original document;
means (372, 422) to produce a document signature from the original document; means (386) for revising the original document to produce a revised document; and
means (387) to produce a revised document signature depending on the revised document;
**characterized in that** the revised document signature also depends on the original document signature.

9. The computer system (304, 350) as claimed in claim 8, including:
means (355, 374) to transmit the original document signature to a secure computer system (303, 450) for time stamping;
means (377, 355, 375, 384) to receive from the secure computer system and store a time stamp for the original document; the time stamp containing the original document signature and a digital stamping time indicating when the time stamp was produced; and
wherein the revised document signature depends on the digital stamping time in the time stamp for the original document.

10. A computer network comprising:
means (356-360 and 370) for an author to create an original document on a user accessible station;
means (355, 374) for transmitting the original document to a secure server; means (372, 422) for producing a signature for the original document;
means (423) to use the signature for proving that the document has not been altered and for identifying the user or station;
means (420, 422) for transmitting the original document signature from the secure server to a notary;
means (472) for providing a time stamp at the notary including the original document signature and a digital time indicating the time at which the signature was received by the notary;
means (470, 473) for transmitting the time stamp to the secure server;
means (424) for verifying that the time stamp is authentic;
means (422) for revising the original document;
means (422) for producing a signature for the revised document depending on the revised document;
**characterized in that** the signature for the revised document also depends on the original document whereby the fact that the revised document was produced from the original document can be verified.

11. A method of operating a computer network, comprising the steps of:
providing (122) an original document on a user system;
producing (132) a revised document depending on the original document;
producing (133) a revised document signature including hashing the revised document to produce a document fingerprint and encrypting the document fingerprint;
transmitting (135) the revised document signature from the user system to a secure computer system;
providing (174) a time stamp for the revised document, the time stamp including the revised document signature and a digital time indicating when the time stamp was produced;
transmitting (212) the time stamp from the secure system to the user system, the time stamp including the revised document signature;
determining (218) whether the time stamp is authentic; and
determining (218) whether the revised document signature in the time stamp is authentic depending on comparison between a decryption of the revised document signature and a hash of the revised document;
**characterized in that** producing the document fingerprint includes hashing the revised document together with information indicating that the revised document was produced from the original document and **in that** determining whether the revised document signature is authentic includes determining whether the revised document was produced from the original document which includes hashing (216) the revised document together with the original document indicating information to recreate the document fingerprint.

12. The method of claim 11 in which the step of determining whether the time stamp is authentic, includes the steps of:
storing the time stamp in a secure storage of the secure system;
transmitting the time stamp from the user system and to the secure system;
comparing the time stamp from the user system with the time stamp in the secure storage;
transmitting the results of the comparison to the user system; and
determining whether the time stamp is authentic depending on the results of the comparison.

13. The method of claim 11 in which, the step of determining whether the time stamp is authentic, includes the steps of:
providing a private key on the secure system;
encrypting the time stamp to produce a time stamp signature on the secure system;
transmitting the time stamp signature from the secure system to the user system;
transmitting the time stamp and time stamp signature from the user system to the secure system;
encrypting the time stamp using the private key to produce a time stamp verification signature;
comparing the time stamp signature with the time stamp verification signature; and
determining whether the time stamp is authentic depending on the results of the comparison.

14. The method of claim 11 in which, the step of determining whether the time stamp is authentic, includes the steps of:
providing a private key on the secure system;
encrypting the time stamp to produce a time stamp signature using the private key on the secure system;
transmitting the time stamp signature from the secure system to the user system;
providing a public key for the private key on the user system;
decrypting the time stamp signature using the public key;
comparing the decrypted time stamp signature with the time stamp or the result of processing the time stamp; and
determining whether the time stamp is authentic depending on the comparison.

15. The method of claim 11 in which the step of determining whether the time stamp is authentic includes:
transmitting information identifying the customer of a subsequent time stamp to the user system;
transmitting the time stamp for the revised document to the subsequent customer;
communicating with the subsequent customer to compare the time stamp for the revised document with the time stamp for the revised document transmitted to the subsequent customer.

16. The method of claim 11 in which:
producing the revised document fingerprint includes hashing the revised document together with information indicating the origin of the revised document; and
determining whether the revised document signature is authentic includes determining whether the revised document is from such origin, which includes hashing the revised document together with the origin indicating information to recreate the document fingerprint

17. The method of claim 11 in which the original document indicating information is dependent on the signature of the original document.

18. The method of claim 11 in which the original document indicating information is dependent on the origin of the original document.

19. The method of claim 11 in which:
the method further comprises obtaining a time stamp for the original document; and
the origin indicating information is dependent on a stamping time of time stamp for the original document.

20. The method of claim 11 in which:
information indicating the identity of the author of the revision of the revised document is included in the hash of the revision, and
determining whether the revised document signature is authentic includes hashing the revised document with the author identifying information.

21. A method of revising a document, comprising:
inputting (192) a revised document to a revisor accessible system;
transmitting (123) the document, a document time stamp, and a time stamp signature for the document from a secure system to the reviser accessible system;
automatically (124) using a public key of a notary for verifying that the time stamp and time stamp signature were produced by the notary listed in the time stamp and that the time stamp has not been altered;
automatically (126) using a public key of an originator for verifying that a document signature in the time stamp were produced by the originator and that the document has not been altered since the signature was produced;
revising the document into the revised document if the verification was successful;
transmitting the revised document from the revisor accessible system to the secure server;
transmitting (172) a revised document signature to a notary;
producing (174) a revised document time stamp containing the revised document signature and a stamp time indicating when the revised document signature was received by the notary;
using (176) a private key of the notary to produce a signature for the revised document time stamp;
transmitting (178) the time stamp and time stamp signature for the revised document back to the server;
storing (180) the revised document, the revised document time stamp and the revised document time stamp signature in a secure storage of the secure server; and
**characterized in that** the method comprises using (134) a private key of an originator of the revision to produce the revised document signature for the revised document using information for verifying that the revised document was produced from the document.

22. A method for automatically revising a document, comprising:
transmitting an original document from an authoring system to the customer system;
automatically storing (194) a revised document, produced on a customer system from the original document, in the customer system;
transmitting (172) a revised document signature for the revised document from the customer system to an electronic notary system;
producing (174) a time stamp record for the revised document containing the revised document signature and a digital time indicating when the document was received by the notary;
using (176) a private key of the notary to encrypt the time stamp to produce a digital signature for the time stamp;
storing (177) the time stamp and time stamp signature in the electronic notary system;
transmitting the time stamp and time stamp signature to the customer;
storing the time stamp and time stamp signature in the customer system; and
**characterized in that** the method comprises using (166) a private key to produce the revised document signature with information for verifying that the revised document was produced from the original document, and has not been changed since the revision was signed.

## Patentansprüche

1. Computernetzwerk (300), das Folgendes umfasst:
ein Computersystem eines Benutzers (304, 350), das dem Benutzer den Zugang zu dem Netzwerk ermöglicht, das Folgendes umfasst:
Mittel (356-360 und 370) zum Bereitstellen eines Originaldokuments;
Mittel (372, 422), um eine Dokumentsignatur vom Originaldokument zu erstellen; und
Mittel (355, 374), um die Signatur des Originaldokuments zu übertragen;
ein sicheres Computersystem (303, 450), das Folgendes umfasst:
Mittel (454, 470), um eine Dokumentsignatur vom Benutzersystem zu empfangen;
Mittel (472), um einen Zeitstempel bereit zu stellen, der die Dokumentsignatur und einen digitalen Zeitpunkt, an dem das Dokument empfangen wurde, enthält; und
Mittel (437, 454, 470), um den Zeitstempel zum Benutzersystem zu übertragen;
wobei das Benutzersystem weiterhin Folgendes umfasst:
Mittel (377, 355, 375, 384), um einen Zeitstempel für das Originaldokument zu empfangen und zu speichern;
Mittel (386) zum Revidieren des Originaldokuments, um ein revidiertes Dokument zu erstellen, und
Mittel (387), um eine revidierte Dokumentsignatur in Abhängigkeit vom revidierten Dokument zu erstellen;
und in dem die Mittel (355, 373) zum Übertragen der Dokumentsignatur dafür geeignet sind, die revidierte Dokumentsignatur zu übertragen;
das Computernetzwerk enthält darüber hinaus Mittel (377, 378, 424, 472, 476, 477, 383, 384 und 485), um den Zeitstempel zu authentifizieren; und
**dadurch gekennzeichnet, dass** die revidierte Dokumentsignatur auch vom Zeitstempel des Originaldokuments abhängig ist.

2. Netzwerk nach Anspruch 1, in dem das Mittel zum Authentifizieren des Zeitstempels Folgendes umfasst:
einen privaten Schlüssel (490) zum Verschlüsseln der Daten in dem sicheren System;
einen öffentlichen Schlüssel (491), der in der Lage ist, die vorher unter Verwendung des privaten Schlüssels verschlüsselten Daten zu entschlüsseln;
Mittel (472), um unter Verwendung des privaten Schlüssels in dem sicheren System eine Zeitstempelsignatur vom Zeitstempel zu erstellen;
Mittel (473), um die Zeitstempelsignatur zum Benutzersystem zu übertragen;
Mittel (383), um die Zeitstempelsignatur unter Verwendung eines öffentlichen Schlüssels auf dem Benutzersystem zu entschlüsseln;
Mittel (384), um den Zeitstempel oder einen Hash-Wert des Zeitstempels mit der entschlüsselten Zeitstempelsignatur auf dem Benutzersystem zu vergleichen, um festzustellen, ob der Zeitstempel authentisch ist.

3. Netzwerk nach Anspruch 1, in dem die Mittel zum Authentifizieren des Zeitstempels Folgendes umfassen:
sicheren Speicher (456) zum Speichern des Zeitstempels auf dem sicheren System;
Mittel (425), um den Zeitstempel vom Benutzersystem zum sicheren System zu übertragen;
Mittel (475), um den Zeitstempel vom sicheren Speicher in das sichere System abzurufen;
Mittel (476), um den abgefragten Zeitstempel und den übertragenen Zeitstempels zu vergleichen; und
Mittel (477), um abhängig vom Vergleich ein Authentifizierungssignals oder ein Authentifizierungs-Fehlersignals vom sicheren System zum Benutzersystem zu übertragen.

4. Netzwerk nach Anspruch 1, in dem die Mittel zum Authentifizieren des Zeitstempels Folgendes umfassen:
Mittel (472), um eine erste Zeitstempelsignatur vom Zeitstempel unter Verwendung eines privaten Schlüssels im sicheren System zu erstellen;
Mittel (470, 473), um den Zeitstempel und die erste Zeitstempelsignatur zum Benutzersystem zu übertragen;
Mittel, um den Zeitstempel zum sicheren System zurückzusenden;
Mittel (473), um eine zweite Zeitstempelsignatur vom zurückgesandten Zeitstempel auf dem sicheren System zu erstellen;
Mittel, um die zweite Zeitstempelsignatur zum Benutzersystem zu übertragen; und
Mittel (383), um die erste Zeitstempelsignatur mit der zweiten Zeitstempelsignatur zu vergleichen, um die Authentizität des Zeitstempels zu überprüfen.

5. Netzwerk nach Anspruch 1, in dem:
die Übertragung vom sicheren Server einen vorhergehenden Zeitstempel und eine vorhergehende Zeitstempelsignatur sowie einen nachfolgenden Zeitstempel und eine nachfolgende Zeitstempelsignatur enthält, wobei jeder Zeitstempel die Identifikation des Kunden enthält;
das Benutzersystem den vorhergehenden und den nachfolgenden Zeitstempel und die Signatur speichert; und
die Mittel zum Authentifizieren des Zeitstempels geeignet sind, um mit dem vom nachfolgenden Zeitstempel identifizierten Kunden zu kommunizieren und um eine Kopie des nachfolgenden Zeitstempels und der Zeitstempelsignatur vom nachfolgenden Kunden zu erhalten.

6. Netzwerk nach Anspruch 1, in dem das Mittel zum Revidieren des Dokuments das Dokument automatisch bei Erhalt des Dokuments revidiert.

7. Netzwerk nach Anspruch 1, in dem das Computersystem des Benutzers eine Autoren-Workstation (350) zum Erstellen des Dokuments enthält und einen sicheren Server (400) zum Speichern des Dokuments, der Dokumentsignatur und des Zeitstempels des Dokuments.

8. Computersystem (304, 350), das Folgendes umfasst:
Mittel (356, 360 und 370) zum Bereitstellen eines Originaldokuments;
Mittel (372, 422), um eine Dokumentsignatur vom Originaldokument zu erstellen;
Mittel (386) zum Revidieren des Originaldokuments, um eine revidiertes Dokument zu erstellen; und
Mittel (387), um abhängig vom revidierten Dokument eine revidierte Dokumentsignatur zu erstellen;
**dadurch gekennzeichnet, dass** die revidierte Dokumentsignatur auch von der Signatur des Originaldokuments abhängt.

9. Computersystem (304, 350) nach Anspruch 8, das Folgendes umfasst:
Mittel (355, 374), um die Signatur des Originaldokuments zu einem sicheren Computersystem (303, 450) zum Zeitstempeln zu übertragen;
Mittel (377, 355, 375, 384), um vom sicheren Computersystem einen Zeitstempel für das Originaldokument zu empfangen und zu speichern; wobei der Zeitstempel die Signatur des Originaldokuments und einen digitalen Stempelzeitpunkt enthält, der angibt, wann der Zeitstempel erstellt wurde; und
in dem die Signatur des revidierten Dokuments vom digitalen Stempelzeitpunkt im Zeitstempel für das Originaldokument abhängig ist.

10. Computernetzwerk, das Folgendes umfasst:
Mittel (356-360 und 370) für einen Verfasser, um ein Originaldokument auf einer für den Benutzer zugänglichen Station zu erstellen;
Mittel (355, 374) zum Übertragen des Originaldokuments auf einen sicheren Server;
Mittel (372, 422) zum Erstellen einer Signatur für das Originaldokument;
Mittel (423), um die Signatur für den Nachweis zu verwenden, dass das Dokument nicht geändert wurde und zum Identifizieren des Benutzers oder der Station;
Mittel (420, 422) zum Übertragen der Signatur des Originaldokuments vom sicheren Server an einen Notar;
Mittel (472) zum Bereitstellen eines Zeitstempels beim Notar, der die Signatur des Originaldokuments und einen digitalen Zeitpunkt enthält, der den Zeitpunkt angibt, an dem die Signatur vom Notar empfangen wurde;
Mittel (470, 473) zum Übertragen des Zeitstempels an den sicheren Server;
Mittel (424) zum Überprüfen, dass der Zeitstempel authentisch ist;
Mittel (422) zum Revidieren des Originaldokuments;
Mittel (422) zum Erstellen einer Signatur für das revidierte Dokument in Abhängigkeit vom revidierten Dokument;
**dadurch gekennzeichnet, dass** die Signatur für das revidierte Dokument auch vom Originaldokument abhängig ist, wobei die Tatsache, dass das revidierte Dokument anhand des Originaldokument erstellt wurde, überprüft werden kann.

11. Verfahren zum Betrieb eines Computemetzwerks, das die folgenden Schritte umfasst:
Bereitstellen (122) eines Originaldokuments auf einem Benutzersystem;
Erstellen (132) eines revidierten Dokuments in Abhängigkeit vom Originaldokument;
Erstellen (133) einer Signatur eines revidierten Dokuments, einschließlich Hashing des revidierten Dokuments, um einen Fingerabdruck eines Dokuments zu erstellen, und Verschlüsseln des Fingerabdrucks des Dokuments;
Übertragen (135) der Signatur des revidierten Dokuments vom Benutzersystem zu einem sicheren Computersystem;
Bereitstellen (174) eines Zeitstempels für das revidierte Dokument, wobei der Zeitstempel die Signatur des revidierten Dokuments und einen digitalen Zeitpunkt enthält, der angibt, wann der Zeitstempel erstellt wurde;
Übertragen (212) des Zeitstempels vom sicheren System zum Benutzersystem, wobei der Zeitstempel die Signatur des revidierten Dokuments enthält;
Feststellen (218), ob der Zeitstempel authentisch ist; und
Feststellen (218), ob die Signatur des revidierten Dokuments im Zeitstempel authentisch ist, abhängig vom Vergleich zwischen einer Entschlüsselung der Signatur des revidierten Dokuments und einem Hash-Wert des revidierten Dokuments;
**dadurch gekennzeichnet, dass** das Erstellen des Fingerabdrucks des Dokuments das Hashing des revidierten Dokuments zusammen mit Informationen umfasst, die angeben, dass das revidierte Dokument anhand des Originaldokuments erstellt wurde, und **dadurch**, dass das Feststellen, ob die Signatur des revidierten Dokuments authentisch ist, beinhaltet, dass festgestellt wird, ob das revidierte Dokument anhand des Originaldokuments erstellt wurde, was das Hashing (216) des revidierten Dokuments zusammen mit dem Originaldokument umfasst, das Informationen zum Wiederherstellen des Fingerabdrucks des Dokuments angibt.

12. Verfahren nach Anspruch 11, in dem der Schritt zum Feststellen, ob der Zeitstempel authentisch ist, die nachfolgenden Schritte umfasst:
Speichern des Zeitstempels in einem sicheren Speicher des sicheren Systems;
Übertragen des Zeitstempels vom Benutzersystem zum sicheren System;
Vergleichen des Zeitstempels des Benutzersystems mit dem Zeitstempel im sicheren Speicher;
Übertragen der Ergebnisse des Vergleichs an das Benutzersystem; und
abhängig von den Ergebnissen des Vergleichs Feststellen, ob der Zeitstempel authentisch ist.

13. Verfahren nach Anspruch 11, in dem der Schritt des Feststellens, ob der Zeitstempel authentisch ist, die nachfolgenden Schritte umfasst:
Bereitstellen eines privaten Schlüssels auf dem sicheren System;
Verschlüsseln des Zeitstempels, um eine Signatur eines Zeitstempels auf dem sicheren System zu erstellen;
Übertragen der Zeitstempelsignatur vom sicheren System zum Benutzersystem;
Übertragen des Zeitstempels und der Zeitstempelsignatur vom Benutzersystem zum sicheren System;
Verschlüsseln des Zeitstempels unter Verwendung des privaten Schlüssels, um eine Signatur zum Überprüfen des Zeitstempels zu erstellen;
Vergleichen der Zeitstempelsignatur mit der Signatur zum Überprüfen des Zeitstempels; und
abhängig von den Ergebnissen des Vergleichs Feststellen, ob der Zeitstempel authentisch ist.

14. Verfahren nach Anspruch 11, in dem der Schritt des Feststellens, ob der Zeitstempel authentisch ist, die nachfolgenden Schritte umfasst:
Bereitstellen eines privaten Schlüssels auf dem sicheren System;
Verschlüsseln des Zeitstempels, um eine Signatur eines Zeitstempels unter Verwendung des privaten Schlüssels auf dem sicheren System zu erstellen;
Übertragen der Zeitstempelsignatur vom sicheren System zum Benutzersystem;
Bereitstellen eines öffentlichen Schlüssels für den privaten Schlüssel auf dem Benutzersystem;
Entschlüsseln der Zeitstempelsignatur unter Verwendung des öffentlichen Schlüssels;
Vergleichen der Signatur des verschlüsselten Zeitstempels mit dem Zeitstempel oder dem Ergebnis des Verarbeitens des Zeitstempels; und
abhängig vom Vergleich Feststellen, ob der Zeitstempel authentisch ist.

15. Verfahren nach Anspruch 11, in dem der Schritt des Feststellens, ob der Zeitstempel authentisch ist, Folgendes umfasst:
Übertragen der Information, die den Kunden eines nachfolgenden Zeitstempels identifizieren, an das Benutzersystem;
Übertragen des Zeitstempels für das revidierte Dokument an den nachfolgenden Kunden;
Kommunizieren mit dem nachfolgenden Kunden, um den Zeitstempel für das revidierte Dokument mit dem Zeitstempel für das an den nachfolgenden Kunden übertragene, revidierte Dokument zu vergleichen.

16. Verfahren nach Anspruch 11, in dem
das Erstellen des Fingerabdrucks des revidierten Dokuments das Hashing des revidierten Dokuments zusammen mit Informationen umfasst, die die Herkunft des revidierten Dokuments angeben; und
das Feststellen, ob die Signatur des revidierten Dokuments authentisch ist, das Feststellen, ob das revidierte Dokument von solcher Herkunft ist, umfasst, was das Hashing des revidierten Dokuments zusammen mit den Informationen umfasst, die die Herkunft angeben, um den Fingerabdruck des Dokuments wieder herzustellen.

17. Verfahren nach Anspruch 11, in dem die das Originaldokument angebenden Informationen von der Signatur des Originaldokuments abhängig sind.

18. Verfahren nach Anspruch 11, in dem die das Originaldokument angebenden Informationen von der Herkunft des Originaldokuments abhängig sind.

19. Verfahren nach Anspruch 11, in dem:
das Verfahren weiterhin das Erhalten eines Zeitstempels für das Originaldokument umfasst; und
die die Herkunft angebenden Informationen von einem Stempelzeitpunkt des Zeitstempels für das Originaldokument abhängig sind.

20. Verfahren nach Anspruch 11, in dem
Informationen, die die Identität des Verfassers der Revision des revidierten Dokuments angeben, in dem Hash-Wert der Revision enthalten sind, und
das Feststellen, ob die Signatur des revidierten Dokuments authentisch ist, das Hashing des revidierten Dokuments mit den Informationen umfasst, die den Verfasser identifizieren.

21. Verfahren zum Revidieren eines Dokuments, das Folgendes umfasst:
Eingeben (192) eines revidierten Dokuments in ein für den Revisor zugängliches System;
Übertragen (123) des Dokuments, eines Zeitstempels für das Dokument und einer Zeitstempelsignatur für das Dokument von einem sicheren System an das für den Revisor zugängliche System;
automatisches (124) Verwenden eines öffentlichen Schlüssels eines Notars zum Überprüfen, dass der Zeitstempel und die Zeitstempelsignatur von dem im Zeitstempel aufgeführten Notar erstellt wurden und dass der Zeitstempel nicht verändert wurde;
automatisches (126) Verwenden eines öffentlichen Schlüssels eines Erstellers zum Überprüfen, dass eine Dokumentsignatur in dem Zeitstempel vom Ersteller erstellt wurde und dass das Dokument seit der Erstellung der Signatur nicht verändert wurde;
Revidieren des Dokuments in das revidierte Dokument, wenn die Überprüfung erfolgreich war;
Übertragen des revidierten Dokuments vom für den Revisor zugänglichen System zum sicheren Server;
Übertragen (172) einer Signatur eines revidierten Dokuments an einen Notar;
Erstellen (174) eines Zeitstempels eines revidierten Dokuments, der die Signatur des revidierten Dokuments und einen Zeitstempel enthält, der angibt, wann der Notar die Signatur des revidierten Dokuments erhalten hat;
Verwenden (176) eines privaten Schlüssels des Notars, um eine Signatur für den Zeitstempel des revidierten Dokuments zu erstellen;
Übertragen (178) des Zeitstempels und der Zeitstempelsignatur für das revidierte Dokument zurück an den Server;
Speichern (180) des revidierten Dokuments, des Zeitstempels für das revidierte Dokument und der Zeitstempelsignatur für das revidierte Dokument in einem sicheren Speicher auf dem sicheren Server; und
**dadurch gekennzeichnet, dass** das Verfahren Folgendes umfasst:
Verwenden (134) eines privaten Schlüssels eines Erstellers der Revision, um die Signatur des revidierten Dokuments für das revidierte Dokument unter Verwendung von Informationen zum Überprüfen, dass das revidierte Dokument anhand des Dokuments erstellt wurde, zu erstellen.

22. Verfahren zum automatischen Revidieren eines Dokuments, das Folgendes umfasst:
Übertragen eines Originaldokuments von einem Autorensystem an das System des Kunden;
automatisches Speichern (194) eines revidierten Dokuments, das auf einem Kundensystem anhand des Originaldokuments im System des Kunden erstellt wurde;
Übertragen (172) der Signatur eines revidierten Dokuments für das revidierte Dokument vom System des Kunden an ein elektronisches Notarsystem;
Erstellen (174) einer Aufzeichnung eines Zeitstempels für das revidierte Dokument, die die Signatur des revidierten Dokuments und einen digitalen Zeitpunkt enthält, der angibt, wann der Notar das Dokument erhalten hat;
Verwenden (176) eines privaten Schlüssels des Notars zum Verschlüsseln des Zeitstempels, um eine digitale Signatur für den Zeitstempel zu erstellen;
Speichern (177) des Zeitstempels und der Zeitstempelsignatur im elektronischen Notarsystem;
Übertragen des Zeitstempels und der Zeitstempelsignatur zum Kunden;
Speichern des Zeitstempels und der Zeitstempelsignatur im System des Kunden; und
**dadurch gekennzeichnet, dass** das Verfahren Folgendes umfasst:
Verwenden (166) eines privaten Schlüssels zum Erstellen der Signatur des revidierten Dokuments mit Informationen zum Überprüfen, dass das revidierte Dokument anhand des Originaldokuments erstellt und seit dem Signieren der Revision nicht geändert wurde.

## Revendications

1. Réseau informatique (300) comprenant :
un système informatique d'utilisateur (304, 350) fournissant un accès d'utilisateur au réseau, comprenant :
des moyens (356-360 et 370) pour fournir un document original;
des moyens (372, 422) pour produire une signature de document à partir du document original, et
des moyens (355, 374) pour transmettre la signature du document original;
un système informatique sécurisé (303, 450), comprenant :
des moyens (454, 470) pour recevoir une signature de document du système d'utilisateur;
un moyen (472) pour fournir une estampille temporelle contenant la signature de document et un temps numérique auquel le document a été reçu; et
des moyens (473, 454, 470) pour transmettre l'estampille temporelle au système d'utilisateur;
le système d'utilisateur comprenant en outre :
des moyens (377, 355, 375, 384) pour recevoir et stocker une estampille temporelle pour le document original;
un moyen (386) pour réviser le document original afin de produire un document révisé; et
un moyen (387) pour produire une signature de document révisé dépendant du document révisé;
et dans lequel les moyens (355, 373) pour transmettre la signature du document sont à même de transmettre la signature du document révisé;
le réseau informatique comprend en outre des moyens (377, 378, 424, 472, 476, 477, 383, 384 et 485) pour authentifier des estampilles temporelles; et
**caractérisé en ce que** la signature du document révisé dépend également de l'estampille temporelle pour le document original.

2. Réseau suivant la revendication 1 dans lequel le moyen pour authentifier l'estampille temporelle, comprend :
une clé privée (490) pour crypter des données dans le système sécurisé;
une clé publique (491) capable de décrypter les données précédemment cryptées au moyen de la clé privée.
un moyen (472) pour produire une signature d'estampille temporelle à partir de l'estampille temporelle au moyen de la clé privée dans le système sécurisé;
un moyen (473) pour transmettre la signature de l'estampille temporelle au système d'utilisateur;
un moyen (383) pour décrypter la signature de l'estampille temporelle au moyen d'une clé publique sur le système d'utilisateur;
un moyen (384) pour comparer l'estampille temporelle ou un hachage de l'estampille temporelle avec la signature de l'estampille temporelle décryptée sur le système d'utilisateur pour déterminer si l'estampille temporelle est authentique.

3. Réseau suivant la revendication 1 dans lequel les moyens pour authentifier l'estampille temporelle, comprennent :
un moyen de stockage sécurisé (456) pour stocker l'estampille temporelle sur le système sécurisé;
un moyen (425) pour transmettre l'estampille temporelle du système d'utilisateur au système sécurisé;
un moyen (475) pour récupérer l'estampille temporelle du stockage sécurisé dans le système sécurisé;
un moyen (476) pour comparer l'estampille temporelle récupérée et l'estampille temporelle transmise; et
un moyen (477) pour transmettre un signal d'authentification ou d'authentification ratée du système sécurisé au système d'utilisateur, en fonction du résultat de la comparaison.

4. Réseau suivant la revendication 1, dans lequel les moyens pour authentifier l'estampille temporelle comprennent :
un moyen (472) pour produire une première signature d'estampille temporelle à partir de l'estampille temporelle au moyen d'une clé privée dans le système sécurisé;
des moyens (470, 473) pour transmettre l'estampille temporelle et première signature d'estampille temporelle au système d'utilisateur;
un moyen pour renvoyer l'estampille temporelle au système sécurisé;
un moyen (473) pour produire une seconde signature d'estampille temporelle à partir de l'estampille temporelle renvoyée sur le système sécurisé;
un moyen pour transmettre la seconde signature d'estampille temporelle au système d'utilisateur; et
un moyen (383) pour comparer la première signature d'estampille temporelle avec la seconde signature d'estampille temporelle pour vérifier l'authenticité de l'estampille temporelle.

5. Réseau suivant la revendication 1, dans lequel
la transmission à partir du serveur sécurisé comprend une estampille temporelle et signature d'estampille temporelle précédente et une estampille temporelle et signature d'estampille temporelle suivante, chaque estampille temporelle comprenant une identification du client;
le système d'utilisateur stocke les estampilles temporelles et signatures d'estampille temporelle précédente et suivante; et
les moyens pour authentifier l'estampille temporelle sont à même de communiquer avec le client identifié par l'estampille temporelle suivante et d'obtenir une copie de l'estampille temporelle et signature d'estampille temporelle suivante du client suivant.

6. Réseau suivant la revendication 1, dans lequel le moyen pour réviser le document révise automatiquement le document dès la réception du document.

7. Réseau suivant la revendication 1, dans lequel le système informatique de l'utilisateur comprend un poste de travail de création (350) pour produire le document et un serveur sécurisé (400) pour stocker le document, la signature de document, et l'estampille temporelle du document.

8. Système informatique (304, 350) comprenant :
des moyens (356, 360 et 370) pour fournir un document original.
des moyens (372, 422) pour produire une signature de document à partir du document original;
un moyen (386) pour réviser le document original afin de produire un document révisé; et
un moyen (387) pour produire une signature de document révisé en fonction du document révisé;
**caractérisé en ce que** la signature du document révisé dépend également de la signature du document original.

9. Système informatique (304, 350) suivant la revendication 8, comprenant :
des moyens (355, 374) pour transmettre la signature du document original à un système informatique sécurisé (303, 450) pour estampillage temporel :
des moyens (377, 355, 375, 384) pour recevoir du système informatique sécurisé et stocker une estampille temporelle pour le document original; l'estampille temporelle contenant la signature du document original et un temps d'estampillage numérique indiquant lorsque l'estampille temporelle a été produite; et
dans lequel la signature du document révisé dépend du temps d'estampillage numérique dans l'estampille temporelle pour le document original.

10. Réseau informatique comprenant :
des moyens (356-360 et 370) pour permettre à un auteur de créer un document original sur un poste accessible à l'utilisateur;
des moyens (355, 374) pour transmettre le document original à un serveur sécurisé;
des moyens (372, 422) pour produire une signature pour le document original;
un moyen (423) pour utiliser la signature afin de prouver que le document n'a pas été modifié et pour identifier l'utilisateur ou le poste;
des moyens (420, 422) pour transmettre la signature du document original du serveur sécurisé à un notaire;
un moyen (472) pour fournir une estampille temporelle à l'endroit du notaire comprenant la signature du document original et un temps numérique indiquant le temps auquel la signature a été reçue par le notaire;
des moyens (470, 473) pour transmettre l'estampille temporelle au serveur sécurisé;
un moyen (424) pour vérifier si l'estampille temporelle est authentique;
un moyen (422) pour réviser le document original;
un moyen (422) pour produire une signature pour le document révisé en fonction du document révisé.
**caractérisé en ce que** la signature pour le document révisé dépend également du document original de sorte que le fait que le document révisé a été produit à partir du document original peut être vérifié.

11. Procédé pour exploiter un réseau informatique, comprenant les étapes suivantes :
fournir (122) un document original sur un système d'utilisateur;
produire (132) un document révisé en fonction du document original;
produire (133) une signature du document révisé comprenant le hachage du document révisé pour produire un document d'empreinte digitale et crypter le document d'empreinte digitale;
transmettre (135) la signature du document révisé du système d'utilisateur à un système informatique sécurisé;
fournir (174) une estampille temporelle pour le document révisé, l'estampille temporelle comprenant la signature du document révisé et un temps numérique indiquant lorsque l'estampille temporelle a été produite;
transmettre (212) l'estampille temporelle du système sécurisé au système d'utilisateur, l'estampille temporelle comprenant la signature du document révisé;
déterminer (218) si l'estampille temporelle est authentique; et
déterminer (218) si la signature du document révisé dans l'estampille temporelle est authentique en fonction d'une comparaison entre un décryptage de la signature du document révisé et un hachage du document révisé;
**caractérisé en** en ce que la production du document d'empreinte digitale comprend un hachage du document révisé avec des informations indiquant que le document révisé a été produit à partir du document original et en ce que la détermination du fait de savoir si la signature du document révisé est authentique comprend la détermination du fait de savoir si le document révisé a été produit à partir du document original qui comprend le hachage (216) du document révisé avec les informations indicatrices du document original pour recréer le document d'empreinte digitale.

12. Procédé suivant la revendication 11, dans lequel l'étape visant à déterminer si l'estampille temporelle est authentique, comprend les étapes suivantes :
stocker l'estampille temporelle dans un moyen de stockage sécurisé du système sécurisé;
transmettre l'estampille temporelle du système d'utilisateur au système sécurisé;
comparer l'estampille temporelle du système d'utilisateur avec l'estampille temporelle dans le stockage sécurisé;
transmettre les résultats de la comparaison au système d'utilisateur; et
déterminer si l'estampille temporelle est authentique en fonction des résultats de la comparaison.

13. Procédé suivant la revendication 11 dans lequel l'étape visant à déterminer si l'estampille temporelle est authentique, comprend les étapes suivantes :
prévoir une clé privée sur le système sécurisé;
crypter l'estampille temporelle afin de produire une signature d'estampille temporelle sur le système sécurisé;
transmettre la signature de l'estampille temporelle du système sécurisé au système d'utilisateur;
transmettre l'estampille temporelle et la signature de l'estampille temporelle du système d'utilisateur au système sécurisé;
crypter l'estampille temporelle au moyen de la clé privée afin de produire une signature de vérification de l'estampille temporelle;
comparer la signature de l'estampille temporelle avec la signature de vérification de l'estampille temporelle; et
déterminer si l'estampille temporelle est authentique en fonction des résultats de la comparaison.

14. Procédé suivant la revendication 11 dans lequel l'étape visant à déterminer si l'estampille temporelle est authentique, comprend les étapes suivantes :
prévoir une clé privée sur le système sécurisé;
crypter l'estampille temporelle afin de produire une signature de l'estampille temporelle au moyen de la clé privée sur le système sécurisé;
transmettre la signature de l'estampille temporelle du système sécurisé au système d'utilisateur;
prévoir une clé publique pour la clé privée sur le système d'utilisateur;
décrypter la signature de l'estampille temporelle au moyen de la clé publique;
comparer la signature de l'estampille temporelle décryptée avec l'estampille temporelle ou le résultat du traitement de l'estampille temporelle; et
déterminer si l'estampille temporelle est authentique en fonction de la comparaison.

15. Procédé suivant la revendication 11 dans lequel l'étape visant à déterminer si l'estampille temporelle est authentique comprend :
transmettre des informations identifiant le client d'une estampille temporelle suivante au système d'utilisateur;
transmettre l'estampille temporelle pour le document révisé au client suivant;
communiquer avec le client suivant pour comparer l'estampille temporelle pour le document révisé avec l'estampille temporelle pour le document révisé transmis au client suivant.

16. Procédé suivant la revendication 11 dans lequel :
la production du document révisé d'empreinte digitale comprend le hachage du document révisé ainsi que de l'information indiquant l'origine du document révisé et
la détermination du fait de savoir si la signature du document révisé est authentique comprend la détermination du fait de savoir si le document révisé provient d'une telle origine, qui comprend le hachage du document révisé ainsi que des informations indiquant l'origine pour recréer le document d'empreinte digitale.

17. Procédé suivant la revendication 11 dans lequel les informations indiquant le document original dépendent de la signature du document original.

18. Procédé suivant la revendication 11 dans lequel les informations indiquant le document original dépendent de l'origine du document original.

19. Procédé suivant la revendication 11 dans lequel le procédé comprend en outre l'obtention d'une estampille temporelle pour le document original; et
les informations indiquant l'origine dépendent d'un temps d'estampillage de l'estampille temporelle pour le document original.

20. Procédé suivant la revendication 11, dans lequel:
des informations indiquant l'identité de l'auteur de la révision du document révisé sont incluses dans le hachage de la révision; et
la détermination du fait de savoir si la signature du document révisé est authentique comprend le hachage du document révisé avec des informations identifiant l'auteur.

21. Procédé de révision d'un document, comprenant :
entrée (192) d'un document révisé dans un système accessible à un réviseur;
transmission (123) du document, d'une estampille temporelle du document, et d'une signature d'estampille temporelle pour le document, d'un système sécurisé vers le système vers le système accessible au réviseur;
utilisation automatique (124) d'une clé publique d'un notaire pour vérifier que l'estampille temporelle et la signature de l'estampille temporelle ont été produites par le notaire répertorié dans l'estampille temporelle et que l'estampille temporelle n'a pas été modifiée;
utilisation automatique (126) d'une clé publique d'un créateur pour vérifier qu'une signature de document dans l'estampille temporelle a été produite par le créateur et que le document n'a pas été modifié depuis que la signature a été produite;
révision du document dans le document révisé, si la vérification a été un succès;
transmission du document révisé du système accessible au réviseur au serveur sécurisé;
transmission (172) d'une signature du document révisé à un notaire;
production (174) d'une estampille temporelle de document révisé contenant la signature du document révisé et un temps d'estampille indiquant lorsque la signature du document révisé a été reçue par le notaire;
utilisation (176) d'une clé privée du notaire pour produire une signature pour l'estampille temporelle du document révisé;
transmission (178) de l'estampille temporelle et de la signature d'estampille temporelle pour le document révisé, en retour vers le serveur;
stockage (180) du document révisé, de l'estampille temporelle du document révisé et de la signature de l'estampille temporelle du document révisé dans une mémoire sécurisée du serveur sécurisé; et
**caractérisé en ce que** le procédé comprend :
l'utilisation (134) d'une clé privée d'un créateur de la révision afin de produire la signature de document révisé pour les informations du document révisé afin de vérifier si le document révisé a été produit à partir du document.

22. Procédé pour réviser automatiquement un document, comprenant :
la transmission d'un document original d'un système de création au système de client;
le stockage automatique (194) d'un document révisé, produit sur un système de client à partir du document original, dans le système de client;
la transmission (172) d'une signature de document révisé pour le document révisé du système de client à un système de notaire électronique;
la production (174) d'un enregistrement d'estampille temporelle pour le document révisé contenant la signature du document révisé et un temps numérique indiquant lorsque le document a été reçu par le notaire;
l'utilisation (176) d'une clé privée du notaire pour crypter l'estampille temporelle afin de produire une signature numérique pour l'estampille temporelle;
le stockage (177) de l'estampille temporelle et de la signature d'estampille temporelle dans le système de notaire électronique;
la transmission de l'estampille temporelle et de la signature de l'estampille temporelle au client; et
le stockage de l'estampille temporelle et de la signature de l'estampille temporelle dans le système du client; et
**caractérisé en ce que** le procédé comprend:
l'utilisation (166) d'une clé privée afin de produire la signature du document révisé avec des informations permettant de vérifier que le document révisé a été produit à partir du document original, et n'a pas été modifié depuis que la révision a été signée.
